# EUROPEAN PATENT APPLICATION

(11) **EP 4 545 781 A1**
(43) Date of publication of application: **30.04.2025**
(21) Application number: 23827140.7
(22) Date of filing: 16.06.2023
(51) Int. Cl.: F02M 37/32, B01D 17/022, B01D 29/07, B01D 29/50, B01D 35/02, B01D 29/21, B01D 17/02, B01D 29/33, B01D 29/58, B01D 29/92, B01D 36/00

(54) **FUEL FILTER**

(30) Priority: 24.06.2022 JP 2022102024
(71) Applicant: YAMASHIN-FILTER CORP., Yokohama-shi, Kanagawa 231-0062 (JP)
(72) Inventor: NODOMI Youichi, Miyaki-gun, Saga 849-0122 (JP); ISHIZUKA Makoto, Yokosuka-shi, Kanagawa 239-0847 (JP)
(74) Representative: Hasegawa, Kan
(86) International application number: PCT/JP2023/022460
(87) International publication number: WO 2023/248955

(57) **Abstract**

Being capable of improving oil and water separation performance while providing a configuration in which a filtration member is easily replaced. A fuel filter includes: a housing including a filter case having a substantially tubular shape in which one end has an opening and the other end is covered, and a head disposed on the filter case to cover the opening; and a filter element disposed in an internal space of the housing and detachable from the housing. The filter element includes a first filter including a first filtration section formed in a tubular shape by folding a sheet-like filtration member into pleats, a second filter disposed on an inner side of the first filtration section, and a first plate at which the first filter and the second filter are disposed. The second filter includes a second filtration section formed in a tubular shape by connecting both ends of a mesh-patterned thin plate, a first end portion covering a first end of the second filtration section, and a second end portion covering a second end of the second filtration section, the second end being on a side opposite to the first end. The first plate is disposed in the head and has a first through-hole formed at a center thereof. The first end portion is disposed at the first plate and is provided with a second through-hole that allows a hollow portion of the second filtration section and the first through-hole to communicate. The first end portion is detachable from the first plate.

## Description

### Technical Field

The present invention relates to a fuel filter.

### Background Art

A fuel filter including a first filtration member having a center axis disposed substantially in a vertical direction, and a second filtration member disposed on an inner side of a first inner tube is disclosed in Patent Document 1. In the first inner tube of the fuel filter, through-holes are formed in a first region that is a band-like region in the vicinity of an upper end, and through-holes are not formed in a second region outside of the first region.

### Citation List

### Patent Literature

Patent Document 1: JP 2016-203091 A

### Summary of Invention

### Technical Problem

In the invention described in Patent Document 1, since a cylindrical pleated filtration member obtained by pleating a plate-like material is used for the first filtration member and the second filtration member, a filter element is expensive. The filter element is a consumable item and thus is desired to be inexpensive and easy to replace; however, only the ease of replacement is insufficient. In addition, since the filter element is a fuel filter, oil and water separation performance needs to be kept high.

The present invention has been made in the light of such circumstances, and an object thereof is to provide a fuel filter configured such that a filtration member can be easily replaced and capable of enhancing oil and water separation performance.

### Solution to Problem

A fuel filter according to the present invention is, for example, a fuel filter including: a housing including a filter case having a substantially tubular shape in which one end has an opening and the other end is covered, and a head disposed on the filter case to cover the opening; and a filter element disposed in an internal space of the housing, the filter element being detachable from the housing. The filter element includes a first filter including a first filtration section formed in a tubular shape comprising a sheet-like filtration member folded into pleats, a second filter disposed on an inner side of the first filtration section, and a first plate at which the first filter and the second filter are disposed. The second filter includes a second filtration section formed in a tubular shape by connecting both ends of a mesh-patterned thin plate, a first end portion covering a first end of the second filtration section, and a second end portion covering a second end of the second filtration section, the second end being on a side opposite to the first end. The first plate is disposed in the head and has a first through-hole formed at a center thereof. The first end portion is disposed at the first plate and is provided with a second through-hole that allows a hollow portion of the second filtration section and the first through-hole to communicate. The first end portion is detachable from the first plate.

According to the fuel filter of the present invention, the filter element includes the first plate disposed in the head, and the first filter and the second filter disposed at the first plate. The second filter is disposed on the inner side of the first filtration section. The first filter includes the first filtration section formed in a tubular shape by folding a sheet-like filtration member into pleats. The second filter includes the second filtration section formed in a tubular shape by connecting both ends of a mesh-patterned thin plate. The first end of the second filter is detachably disposed at the first plate. As a result, fuel is caused to pass through the first filtration section to turn moisture contained in the fuel into water droplets having a large diameter, and the water droplets fall downward. In addition, the water droplets that have not fallen are captured on the surface of the second filtration section, and thus oil and water separation performance can be improved. In addition, the second filter unlikely to be clogged is easily removed, and the first filtration section likely to be clogged can be easily replaced.

The first through-hole may include a large-diameter portion into which the first end portion is inserted and a small-diameter portion having a diameter smaller than that of the large-diameter portion. The small-diameter portion may be interposed between the head and the large-diameter portion. The second end portion may be provided with a gripping portion. Accordingly, a user can pull out the second filter from the first plate by gripping and using the gripping portion, and thus the second filter can be easily detached.

The fuel filter may include a baffle plate having a tubular shape and disposed between the first filter and the second filter. The baffle plate may have one end disposed at the first plate. Accordingly, the travel distance of the fuel is increased by the baffle plate and water droplets easily fall, and thus oil and water separation performance can be improved.

A fuel filter according to the present invention is, for example, a fuel filter including: a housing including a filter case having a substantially tubular shape in which one end has an opening and the other end is covered, and a head disposed on the filter case to cover the opening; and a filter element disposed in an internal space of the housing and detachable from the housing. The filter element includes a first filter including a first filtration section formed in a tubular shape comprising a sheet-like filtration member folded into pleats, a baffle plate having a tubular shape and disposed on an inner side of the first filter, and a first plate at which the first filter and the baffle plate are disposed. The first plate is disposed in the head and has a first through-hole formed at a center thereof. A hollow portion of the baffle plate and an outflow portion disposed in the head are configured to communicate with each other through the first through-hole.

According to the fuel filter of the present invention, the filter element includes the first plate disposed in the head, and the first filter and the baffle plate disposed at the first plate. The baffle plate is disposed on the inner side of the first filtration section. Accordingly, the travel distance of the fuel is increased by the baffle plate and water droplets easily fall, and thus oil and water separation performance can be improved.

The baffle plate may have a taper having a diameter gradually decreasing with distance from the first plate. Accordingly, the fuel easily flows downward along the baffle plate.

The baffle plate may have a height equal to or greater than a height of the first filtration section. Accordingly, the travel distance of the fuel is increased, and water droplets easily fall.

A spiral groove or rib may be formed in an outer peripheral surface of the baffle plate. Accordingly, the travel distance of the fuel is further increased, and water droplets more easily fall.

### Advantageous Effects of Invention

According to the present invention, oil and water separation performance can be improved while a filtration member can be easily replaced.

### Brief Description of Drawings

FIG. 1 is a cross-sectional view illustrating an overview of a fuel filter 1 according to an embodiment of the present invention.
FIG. 2 is a cross-sectional view illustrating an overview of a filter element 40.
FIG. 3 is an exploded view illustrating an overview of the filter element 40.
FIG. 4 is a cross-sectional view illustrating an overview of a filter element 40A.
FIG. 5 is an exploded view illustrating an overview of the filter element 40A.
FIG. 6 is a cross-sectional view illustrating an overview of a fuel filter 2.
FIG. 7 is a cross-sectional view illustrating an overview of a filter element 40B.
FIG. 8 is a diagram illustrating an overview of a baffle plate 45, in which (A) is a side view, and (B) is a cross-sectional view.
FIG. 9 is a diagram illustrating an overview of a baffle plate 45A, in which (A) is a side view, and (B) is a cross-sectional view.
FIG. 10 is a diagram illustrating an overview of a baffle plate 45B.
FIG. 11 is a cross-sectional view illustrating an overview of a fuel filter 3.

### Description of Embodiments

Embodiments of the present invention will be described below in detail with reference to the drawings. The present invention is a fuel filter configured to remove dust, water, or the like contained in fuel. The fuel filter can be disposed in a construction machine, an automobile, or the like.

The fuel filter is disposed at the downstream side of a fuel tank. A pump is disposed at the downstream side of the fuel filter. When the pump is operated, fuel is supplied to a fuel filter 1, filtered by the fuel filter 1, and discharged from the fuel filter 1. Thereafter, the fuel is supplied to an internal combustion engine through the pump.

### First Embodiment

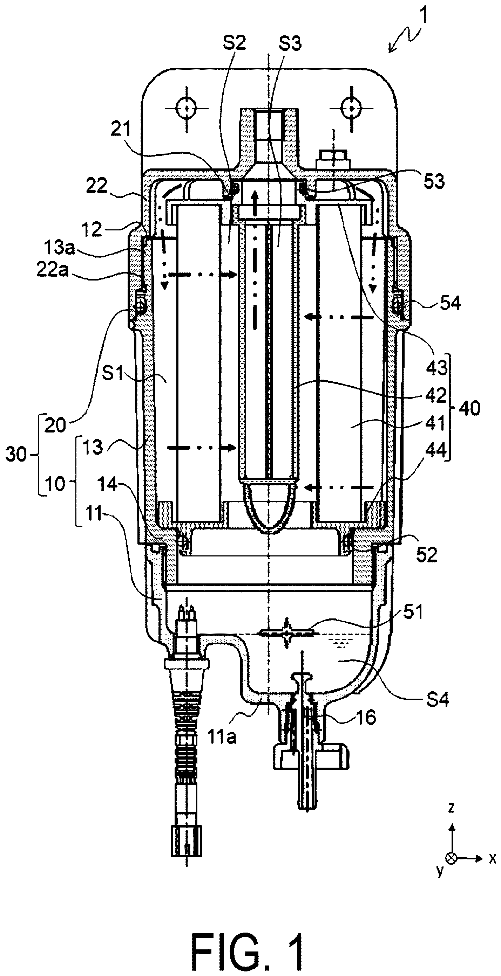

FIG. 1 is a cross-sectional view illustrating an overview of the fuel filter 1 according to an embodiment of the present invention. The fuel filter 1 mainly includes: a housing 30 including a filter case 10 and a head 20; and a filter element 40.

The filter case 10 is made of resin or metal and includes a first case 11 having a bottomed, substantially cylindrical shape (here, a bottomed cylindrical shape) and a second case 13 having a substantially tubular shape. In the present embodiment, the metal is, for example, stainless steel and includes various kinds of metals having high corrosion resistance. Note that the first case 11 and the second case 13 may be a single component.

The first case 11 is disposed on the lower side (-z side) of the second case 13. The first case 11 includes an opening at an upper end thereof, and a lower end thereof is covered by a bottom surface 11a. A space in the vicinity of the bottom surface 11a of the filter case 10 is a water storage portion S4, and a drain plug 16 is disposed at the bottom surface 11a. A float 51 is disposed in the water storage portion S4 so that the water level can be checked.

An upper end of the filter case 10 is an open end 12. The head 20 is disposed to cover the open end 12. The second case 13 is provided with a thread portion 13a with which a thread portion 22a disposed in a tubular portion 22 of the head 20 is screwed.

The second case 13 includes a plate-like portion 14. When the filter element 40 is placed on the plate-like portion 14, the thread portion 22a is screwed with the thread portion 13a, and the head 20 is attached to the filter case 10, the filter element 40 is inserted into the head 20, and the filter element 40 is fixed inside the housing 30.

An elastic member 52 such as an O-ring is disposed between the plate-like portion 14 and the filter element 40, and an elastic member 53 such as an O-ring is disposed between the head 20 and the filter element 40. Thus, the filter element 40 is fixed to the plate-like portion 14 and the head 20, and a gap between the filter element 40 and the plate-like portion 14 and a gap between the filter element 40 and the head 20 are sealed so that the fuel does not leak. An elastic member 54 such as an O-ring is disposed between the second case 13 and the head 20. Thus, the housing 30 is sealed so that the fuel does not leak.

The head 20 is made of metal and is configured to supply the fuel to the filter element 40 and discharge the fuel filtered by the filter element 40. The head 20 includes a tubular portion 21 in which the filter element 40 is disposed and the tubular portion 22 disposed in the second case 13.

The space inside the housing 30 is divided into two spaces by the filter element 40. Of the two spaces, the space between the housing 30 and the filter element 40 is a space S1, and the spaces inside the filter element 40 are spaces S2 and S3.

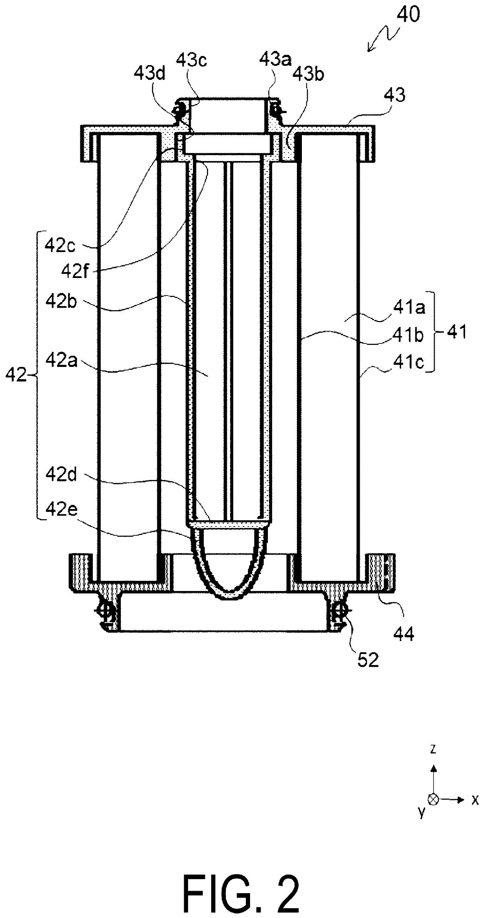

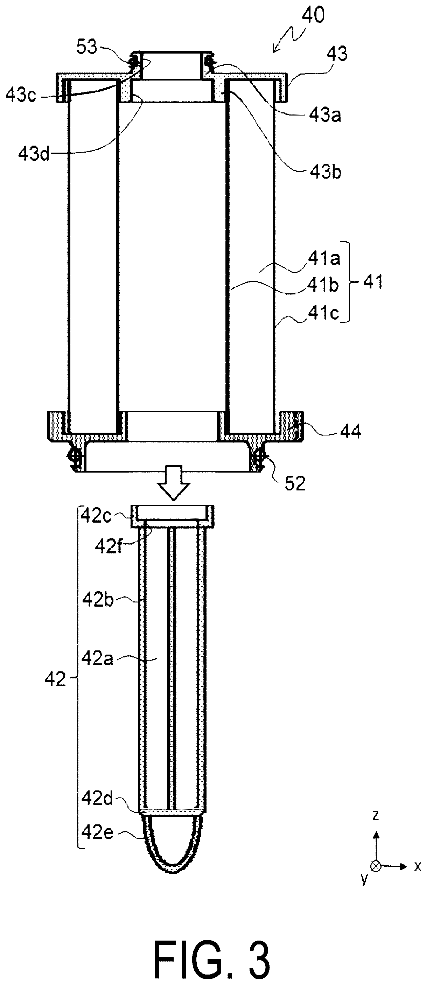

FIG. 2 is a cross-sectional view illustrating an overview of the filter element 40. FIG. 3 is an exploded view illustrating an overview of the filter element 40. The filter element 40 mainly includes a first filter 41, a second filter 42, and plates 43, 44.

The first filter 41 mainly includes a first filtration section 41a, an inner tube 41b, and an outer tube 41c. The first filtration section 41a is formed by pleating a plate-like material (into pleats) and forming a tubular shape (here, a cylindrical shape). The first filtration section 41a removes dust in the fuel and condenses moisture in the fuel. Specifically, when the fuel passes through the first filtration section 41a, the moisture contained in the fuel is condensed into water droplets having a larger diameter.

The inner tube 41b is disposed along an inner peripheral surface of the first filtration section 41a, and the outer tube 41c is disposed along an outer peripheral surface of the first filtration section 41a. The inner tube 41b and the outer tube 41c are provided with a large number of holes through which the fuel can pass. Note that the inner tube 41b and the outer tube 41c are not necessarily required.

The first filter 41 is provided with the plate 43 covering an upper side (+z side) end, and with the plate 44 covering a lower side (-z side) end. The plate 43 is provided with a tubular portion 43a at the center. The tubular portion 43a is inserted into the tubular portion 21, and thus the filter element 40 is disposed in the head 20.

The plate 43 includes a tubular portion 43b disposed adjacent to the tubular portion 43a. The second filter 42 is disposed in a hollow portion 43d of the tubular portion 43b. In the inside of the filter element 40, the outside of the second filter 42 is the space S2, and the inside of the second filter 42 is the space S3.

The second filter 42 mainly includes a second filtration section 42a, a frame 42b, a tubular portion 42c, a plate 42d, and a gripping portion 42e.

The second filtration section 42a is formed in a tubular shape by connecting both ends of a mesh-patterned thin plate. The second filtration section 42a has water repellency. The frame 42b is disposed on the second filtration section 42a and reinforces the second filtration section 42a.

The frame 42b, the tubular portion 42c, the plate 42d, and the gripping portion 42e are made of, for example, resin. The frame 42b, the tubular portion 42c, the plate 42d, and the gripping portion 42e preferably have water repellency.

The tubular portion 42c (corresponding to a first end portion of the present invention) covers a +z side end of the second filtration section 42a. The tubular portion 42c has a tubular shape and is detachably disposed on the plate 43. The tubular portion 42c is provided with a through-hole 42f that allows a hollow portion of the second filtration section 42a and hollow portions 43c, 43d (corresponding to a first through-hole of the present invention) of the tubular portions 43a, 43b to communicate. Note that the shape of the tubular portion 42c is not limited to a tubular shape but may be, for example, a plate-like shape.

The plate 42d (corresponding to a second end portion of the present invention) covers a -z side end of the second filtration section 42a. The plate 42d has a plate-like shape and is provided with the gripping portion 42e.

The hollow portion 43c (corresponding to a small-diameter portion of the present invention) of the tubular portion 43a has a diameter smaller than that of the hollow portion 43d (corresponding to a large-diameter portion of the present invention) of the tubular portion 43b. The tubular portion 43a and the hollow portion 43c are interposed between the head 20 (see FIG. 1) and the tubular portion 43b and the hollow portion 43d.

The second filter 42 (the tubular portion 42c) is detachable from the plate 43. As illustrated in FIG. 3, by inserting the second filter 42 from the -z side toward the plate 43 (in the +z direction) and bringing an end of the tubular portion 42c in contact with a bottom surface of the hollow portion 43d, the tubular portion 42c is fixed into the hollow portion 43d and the second filter 42 is attached to the plate 43. An elastic member (not illustrated) is disposed between the hollow portion 43d and the tubular portion 42c, and thus the second filter 42 does not drop from the plate 43.

When a user grips the gripping portion 42e and pulls out the second filter 42 in the -z direction (see the open arrow in FIG. 3), the second filter 42 (the tubular portion 42c) is removed from the hollow portion 43d.

The description will now return to FIG. 1. In FIG. 1, a flow of the fuel is indicated by the two-dot chain line. The fuel guided from a fuel tank (not illustrated) to the fuel filter 1 is unfiltered. The fuel flows into the space S1 through an inflow portion (not illustrated) disposed in the head 20. The fuel that has flowed into the space S1 passes through the first filter 41, and thus dust is removed.

Further, when the fuel passes through the first filter 41 (the first filtration section 41a), moisture contained in the fuel is condensed into water droplets having a larger diameter. Since water has the specific gravity larger than that of oil, the water drops basically fall downward and accumulate in the water storage portion S4. Even when the water droplets do not fall, the water droplets remain on the surface of the second filter 42 and do not pass through the second filter 42. Furthermore, when the amount of the fuel passing through the second filter 42 increases and the water droplets that have accumulated on the surface of the second filter 42 grow to have a large diameter, the water droplets fall downward and accumulate in the water storage portion S4. Thus, the moisture contained in the fuel can be separated and removed.

The fuel that has passed through the first filter 41 and flowed into the space S2 passes through the second filter 42 and flows into the space S3. The fuel that has flowed into the space S3 flows out from the fuel filter 1 through an outflow portion (not illustrated) of the head 20 and is guided to an engine (not illustrated).

Since the repeated filtration clogs the first filtration section 41a, the filter element 40 is replaced. First, the filter case 10 and the head 20 are disassembled, and the filter element 40 is removed from the filter case 10 and the head 20. Thereafter, as illustrated in FIG. 3, the second filter 42 is removed from the plate 43 by using the gripping portion 42e. Thus, the used first filter 41 and the plates 43, 44 are taken out. Since the second filtration section 42a is formed in a meshed pattern and is unlikely to be clogged, the second filter 42 can be reused.

The second filter 42 to be reused is attached to a new first filter 41 and the plates 43, 44 to produce a new filter element 40 and the new filter element 40 is attached to the housing 30, and thus the replacement of the filter element 40 is completed.

According to the present embodiment, the fuel is caused to pass through the first filtration section 41a to turn the moisture contained in the fuel into water droplets having a large diameter, and the water droplets fall downward. In addition, the water droplets that have not fallen are captured on the surface of the second filtration section 42a. As a result, oil and water separation performance can be improved.

Further, according to the present embodiment, the second filter 42 unlikely to be clogged is easily removed from the filter element 40, and the first filtration section 41a likely to be clogged can be easily replaced.

Furthermore, in the present embodiment, the second filter 42 is pulled out from below and removed from the filter element 40, but the mode of removing the second filter is not limited thereto.

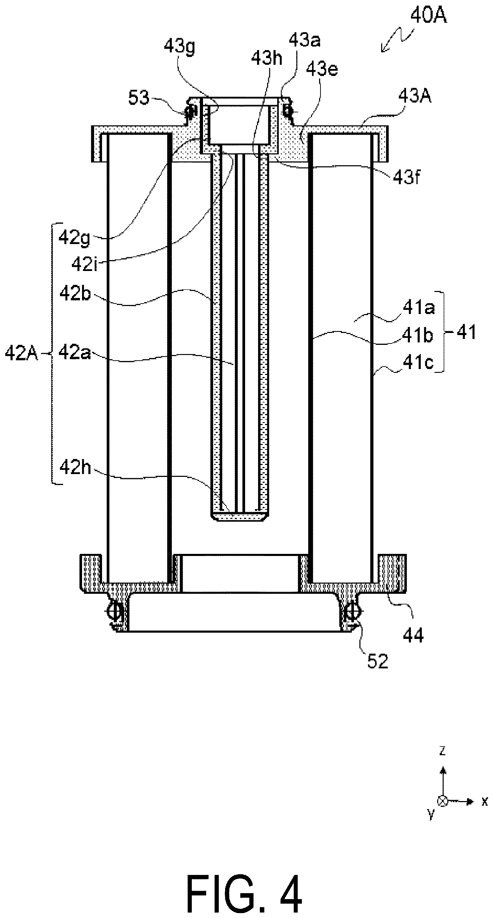

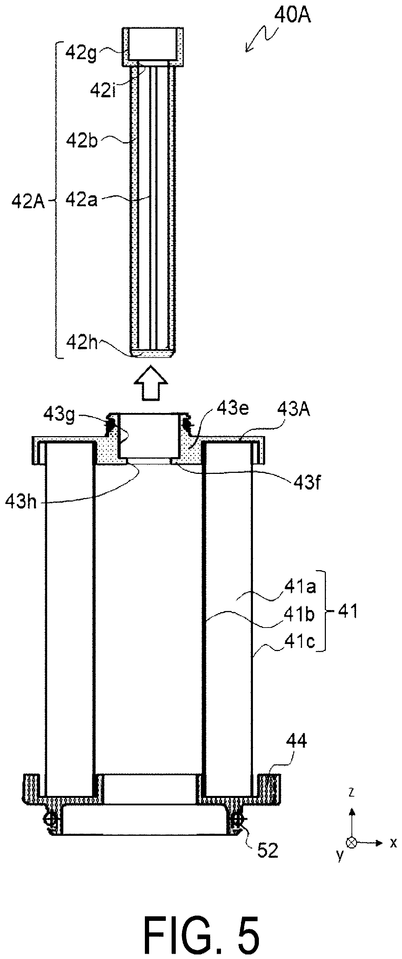

FIG. 4 is a cross-sectional view illustrating an overview of a filter element 40A according to a modified example. FIG. 5 is an exploded view illustrating an overview of the filter element 40A. The filter element 40A mainly includes the first filter 41, a second filter 42A, and a plate 43A and the plate 44.

The plate 43A (corresponding to the first plate of the present invention) is disposed to cover the upper side (+z side) end of the first filter 41. The plate 43A is provided with the tubular portion 43a and a tubular portion 43e at the center. The tubular portion 43a is inserted into the tubular portion 21, and thus the filter element 40A is disposed in the head 20.

The tubular portion 43e is disposed adjacent to the tubular portion 43a. A plate-like portion 43f is disposed adjacent to the tubular portion 43e. The second filter 42A is disposed in a hollow portion 43g of the tubular portions 43a, 43e and a hollow portion 43h of the plate-like portion 43f. The hollow portion 43h has a diameter smaller than that of the hollow portion 43g.

The second filter 42A mainly includes the second filtration section 42a, the frame 42b, a tubular portion 42g, and a plate 42h. The frame 42b, the tubular portion 42g, and the plate 42h are formed of, for example, resin having water repellency.

The tubular portion 42g (corresponding to the first end portion of the present invention) covers the +z side end of the second filtration section 42a. The plate 42h (corresponding to the second end portion of the present invention) has a plate shape and covers the -z side end of the second filtration section 42a. Note that the shapes of the tubular portion 42g and the plate 42h are not limited thereto.

The tubular portion 42g has a tubular shape and is provided with a through-hole 42i that allows the hollow portion of the second filtration section 42a and the hollow portions 43g, 43h (corresponding to the first through-hole of the present invention) to communicate.

The second filter 42A is detachable from the plate 43A. As illustrated in FIG. 5, by inserting the second filter 42A from the +z side toward the plate 43A (in the -z direction) and bringing a bottom surface of the tubular portion 42g in contact with a bottom surface of the hollow portion 43g, the tubular portion 42g is fixed into the hollow portion 43g and the second filtration section 42a is inserted into the hollow portion 43h. Thus, the second filter 42A is attached to the plate 43A. In addition, an elastic member (not illustrated) may be disposed between the hollow portion 43d and the tubular portion 42c.

When a user grips the tubular portion 42g and pulls out the second filter 42A in the +z direction, the second filter 42A is removed from the plate 43A. Additionally, a gripping portion may be disposed on the tubular portion 42g.

Also, in the present modified example, the fuel is caused to pass through the first filtration section 41a to turn the moisture contained in the fuel into water droplets having a large diameter, and the water droplets fall downward. In addition, the water droplets that have not fallen are captured on the surface of the second filtration section 42a, and thus oil and water separation performance can be improved. Further, the second filter 42A unlikely to be clogged can be removed from the filter element 40A, and the first filtration section 41a likely to be clogged can be easily replaced. Furthermore, in the present modified example, since the second filter 42A can be pulled out from above and replaced, the fuel does not drip to the user's hand or the periphery thereof at the time of replacement, and the filter can be easily replaced.

### Second Embodiment

Although the filter element 40 includes the first filter 41 and the second filter 42 in the first embodiment, the configuration of the filter element is not limited to thereto. A second embodiment is an aspect in which a filter element includes a baffle plate. A fuel filter 2 according to the second embodiment will be described below. Note that the same components as those in the first embodiment and the modified example are denoted by the same reference numerals, and descriptions thereof will be omitted.

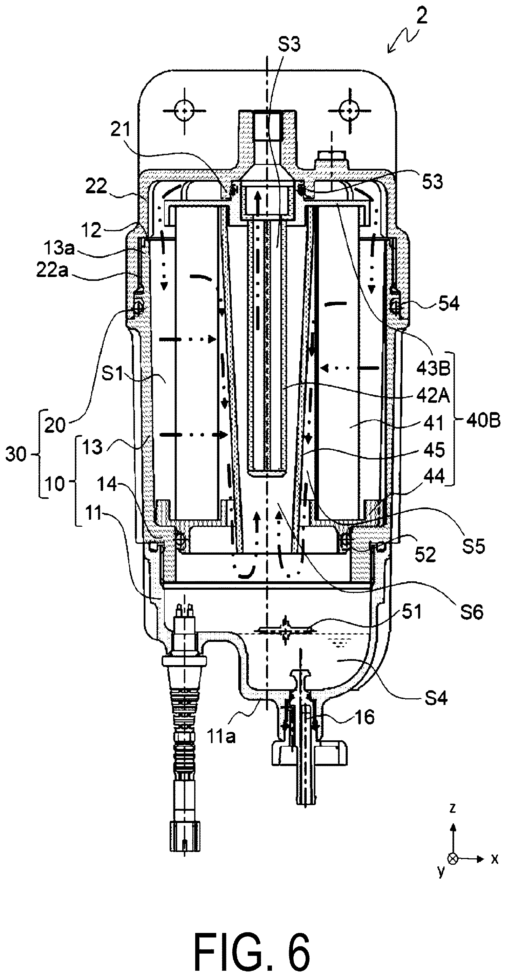

FIG. 6 is a cross-sectional view illustrating an overview of the fuel filter 2. The fuel filter 2 mainly includes: the housing 30 including the filter case 10 and the head 20; and a filter element 40B.

When the thread portion 22a is screwed with the thread portion 13a and the head 20 is attached to the filter case 10, the filter element 40B is placed on the plate-like portion 14, and the filter element 40B is inserted into the tubular portion 21. Thus, the filter element 40B is fixed inside the housing 30.

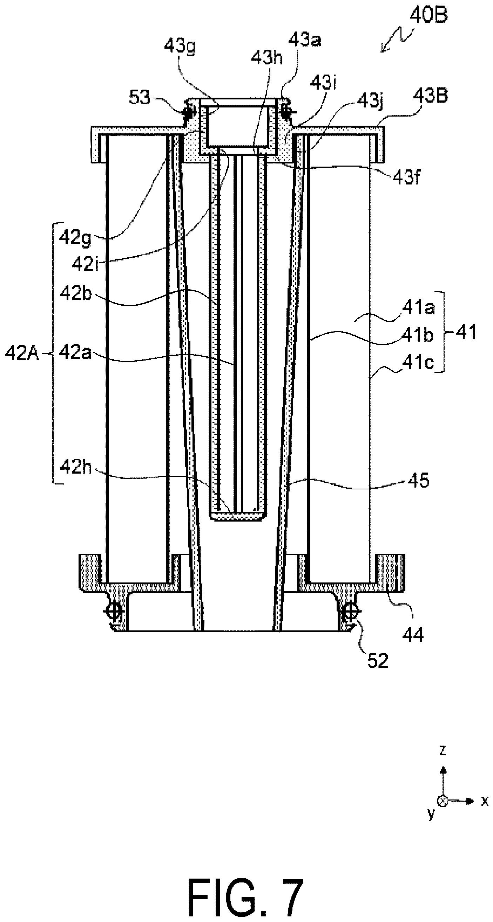

FIG. 7 is a cross-sectional view illustrating an overview of the filter element 40B. The filter element 40B mainly includes the first filter 41, the second filter 42A, a plate 43B and the plate 44, and a baffle plate 45.

The plate 43B (corresponding to the first plate of the present invention) is disposed to cover the upper side (+z side) ends of the first filter 41 and the baffle plate 45. The plate 43B is provided with the tubular portion 43a and a tubular portion 43i at the center. The tubular portion 43a is inserted into the tubular portion 21, and thus the filter element 40B is disposed in the head 20.

The tubular portion 43i is disposed adjacent to the tubular portion 43a. The plate-like portion 43f is disposed adjacent to the tubular portion 43e. The second filter 42A is detachably disposed in the hollow portion 43g of the tubular portions 43a, 43i and the hollow portion 43h of the plate-like portion 43f. The hollow portion 43h has a diameter smaller than that of the hollow portion 43g.

One end of the baffle plate 45 is disposed at an outer peripheral surface 43j of the tubular portion 43i. The baffle plate 45 is disposed between the first filter 41 and the second filter 42A.

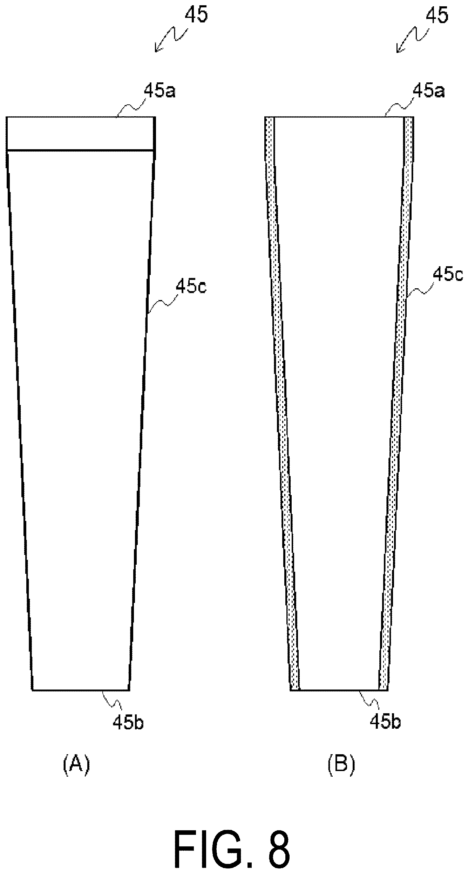

FIG. 8 is a diagram illustrating an overview of the baffle plate 45, in which (A) is a side view, and (B) is a cross-sectional view. The baffle plate 45 is a member formed in a tubular shape by connecting both ends of a plate-like member, and an upper end 45a (a +z side end) and a lower end 45b (a -z side end) are opened. A side surface 45c has the largest diameter at the upper end 45a and the smallest diameter at the lower end 45b. Since no holes are disposed in the side surface 45c, the side surface 45c does not allow fuel to pass through.

The description will now return to FIG. 7. The upper end 45a of the baffle plate 45 is brought in contact with the plate 43B, and thus the opening is closed. The baffle plate 45 has a taper having a diameter gradually decreasing with distance from the plate 43B (the upper end 45a).

The height of the baffle plate 45 is equal to or greater than the height of the first filter 41. Since the upper end 45a of the baffle plate 45 and an upper end of the first filter 41 coincide with each other, the lower end 45b of the baffle plate 45 is located on the lower side (-z side) of a lower end of the first filter 41.

The description will now return to FIG. 6. In FIG. 6, a flow of the fuel is indicated by the two-dot chain line. The fuel introduced from a fuel tank (not illustrated) to the fuel filter 2 flows into the space S1 through the inflow portion (not illustrated) disposed in the head 20. The fuel that has flowed into the space S1 passes through the first filter 41, and thus dust is removed, and the fuel flows into a space (space S5) between the baffle plate 45 and the first filter 41. In addition, the fuel passes through the first filtration section 41a, and thus the moisture contained in the fuel that has flowed into the space S5 is condensed into water droplets having a larger diameter.

Since the baffle plate 45 does not allow the fuel to pass through, the fuel that has flowed into the space S5 flows downward (in the -z direction) along the baffle plate 45 and flows from the opening at the lower end (-z side end) of the baffle plate 45 into an internal space (a space S6) of the baffle plate 45. The fuel that has flowed into the space S6 passes through the second filter 42A, flows into the space S3, and flows out from the fuel filter 1 through the outflow portion (not illustrated) of the head 20.

Since the baffle plate 45 is disposed, the fuel that has passed through the first filter 41 detours along the baffle plate 45 and flows toward the second filter 42A. Therefore, the travel distance of the fuel is increased by the baffle plate 45, and water drops easily fall under their own weight toward the water storage portion S4. In the present embodiment, since the lower end 45b of the baffle plate 45 is located on the lower side (-z side) of the lower end of the first filter 41, all of the fuel that has passed through the first filter 41 can flow downward along the baffle plate 45. Consequently, the water droplets easily fall under their own weight toward the water storage portion S4.

Even when the water droplets do not fall, the water droplets remain on the surface of the second filter 42, do not pass through the second filter 42, and fall and accumulate in the water storage portion S4 during the stage at which the water droplets have a large diameter.

Since the repeated filtration clogs the first filtration section 41a, the filter element 40B is replaced. First, the filter case 10 and the head 20 are disassembled, and the filter element 40B is removed from the filter case 10 and the head 20. Thereafter, the second filter 42A is removed from the plate 43B. The second filter 42A can be reused.

According to the present embodiment, the fuel is caused to pass through the first filtration section 41a to turn the moisture contained in the fuel into water droplets having a large diameter, and the fuel is bypassed by the baffle plate 45 to increase the travel distance. As a result, the water droplets easily fall and oil and water separation performance is improved.

Further, according to the present embodiment, since the second filter 42A unlikely to be clogged can be removed, the first filtration section 41a likely to be clogged can be easily replaced.

Furthermore, in the present embodiment, the baffle plate 45 has a taper in which the diameter is largest at the upper end 45a and becomes smaller toward the lower end 45b, but the shape of the baffle plate is not limited thereto. For example, the baffle plate may have a cylindrical shape without a taper. However, in order to allow the fuel to easily flow downward, the baffle plate 45 is desired to have a taper.

Further, in the present embodiment, the lower end 45b of the baffle plate 45 is located on the lower side of the lower end of the first filter 41, but the height of the baffle plate is not limited thereto. For example, the lower end of the baffle plate may be located between a lower end of the second filter 42 and the lower end of the first filter 41. Thus, the fuel that has passed through the first filter 41 is prevented from directly hitting the second filter 42, and the fuel can be detoured. Furthermore, regardless of the height of the baffle plate, as long as the baffle plate is disposed adjacent to the plate 43B, the effect of detouring the fuel can be obtained. However, in order to increase the travel distance of the fuel as much as possible, the height of the baffle plate 45 is desired to be increased as much as possible.

Additionally, in the present embodiment, the both ends of the plate-like member are connected to form the baffle plate 45, and the side surface is flat; however, a rib, a groove, or the like may be provided in the side surface of the baffle plate.

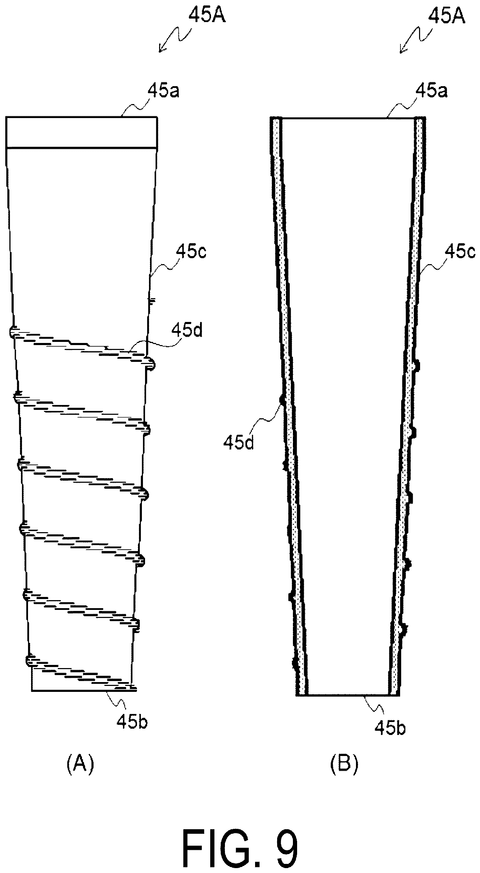

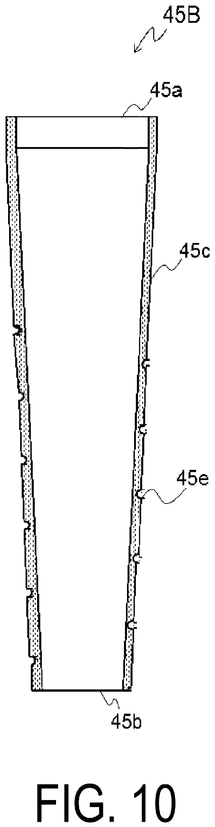

FIG. 9 is a diagram illustrating an overview of a baffle plate 45A according to a modified example, in which (A) is a side view, and (B) is a cross-sectional view. The baffle plate 45A is provided with a spiral rib 45d on the side surface 45c. FIG. 10 is a diagram illustrating an overview of a baffle plate 45B according to a modified example. The baffle plate 45B is provided with a spiral groove 45e on the side surface 45c. By providing the rib 45d or the groove 45e on the side surface 45c, the fuel can flow spirally along the rib 45d or the groove 45e. Therefore, the travel distance of the fuel is further increased, and water droplets are more likely to fall.

### Third Embodiment

Although the filter element 40 includes the first filter 41 and the second filter 42 in the first embodiment, the configuration of the filter element is not limited to thereto. A third embodiment is an aspect in which a filter element does not include the second filter 42. A fuel filter 3 according to the third embodiment will be described below. Note that the same components as those in the first embodiment and the second embodiment are denoted by the same reference numerals, and descriptions thereof will be omitted.

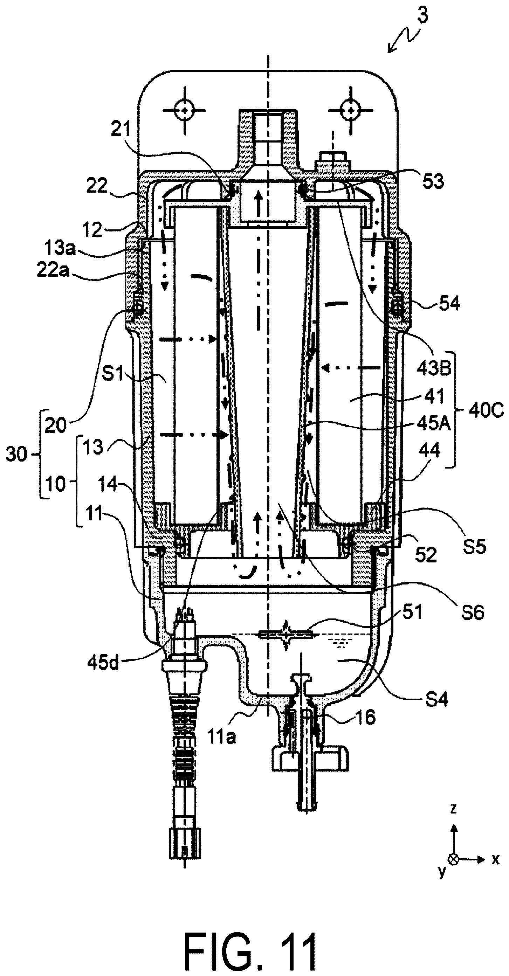

FIG. 11 is a cross-sectional view illustrating an overview of the fuel filter 3. The fuel filter 3 mainly includes: the housing 30 including the filter case 10 and the head 20; and a filter element 40C. The filter element 40C mainly includes the first filter 41, the plates 43B, 44, and the baffle plate 45A.

When the thread portion 22a is screwed with the thread portion 13a and the head 20 is attached to the filter case 10, the filter element 40C is placed on the plate-like portion 14, and the filter element 40C (the tubular portion 43a) is inserted into the tubular portion 21. Thus, the filter element 40C is fixed inside the housing 30.

In FIG. 11, a flow of the fuel is indicated by the two-dot chain line. The fuel introduced a fuel tank (not illustrated) to the fuel filter 3 flows into the space S1 through the inflow portion (not illustrated) disposed in the head 20. The fuel that has flowed into the space S1 passes through the first filter 41, and thus dust is removed, and the fuel flows into the space (space S5) between the baffle plate 45 and the first filter 41. In addition, the fuel passes through the first filtration section 41a, and thus the moisture contained in the fuel that has flowed into the space S5 is condensed into water droplets having a larger diameter.

Since the baffle plate 45 does not allow the fuel to pass through, the fuel that has flown into the space S5 flows downward (in the -z direction) along the side surface 45c while spirally rotating along the rib 45d, and flows into the space S6 from the opening at the lower end (-z side end) of the baffle plate 45. The fuel that has flowed into the space S6 flows out from the fuel filter 3 through the outflow portion (not illustrated) of the head 20.

Since the repeated filtration clogs the first filtration section 41a, the filter element 40C is replaced. First, the filter case 10 and the head 20 are disassembled, and the filter element 40C is removed from the filter case 10 and the head 20. Thereafter, a new filter element 40C is attached to the housing 30, and thus the replacement of the filter element 40C is completed.

According to the present embodiment, by providing the baffle plate 45A, the travel distance of the fuel that has passed through the first filter 41 is increased, and water droplets easily fall under their own weight toward the water storage portion S4. In the present embodiment, since the lower end 45b of the baffle plate 45 is located on the lower side (-z side) of the lower end of the first filter 41, the travel distance of the fuel is large, and oil and water can be separated without using the second filter 42.

Although the filter element 40C includes the baffle plate 45A in the present embodiment, a baffle plate is not limited to the baffle plate 45A, and the baffle plate 45 or the baffle plate 45B can be used. In addition, the shape and height of the baffle plate included in the filter element 40C are not limited thereto. However, since the second filter 42 is not used, the height of the baffle plate 45A is desired to be increased as much as possible.

The embodiments of this invention are described above in detail with reference to the drawings. However, specific configurations are not limited to the embodiments and also include changes in design or the like without departing from the gist of the invention. For example, in the examples described above, detailed description is made to facilitate understanding of the present invention, and the examples are not necessarily limited to examples including all the configurations described above. In addition, the configuration of an embodiment can be replaced partially with the configurations of other embodiments. In addition, addition, deletion, replacement, or the like of other configurations can be made on the configurations of the embodiments.

In addition, the term "substantially" is not to be understood as merely being strictly the same, and is a concept that includes errors and modifications to an extent that does not result in loss in identity. For example, the term "cylindrical shape" is a concept that includes a case where, for example, the shape can be identified with the cylindrical shape, and is not strictly limited to the cylindrical shape. Further, simple expressions such as orthogonal, parallel, and identical are not to be understood as merely being strictly, for example, orthogonal, parallel, and identical, and include being, for example, substantially parallel, substantially orthogonal, and substantially identical.

In addition, the term "vicinity" means to include a range of regions (which can be determined as desired) near a position serving as a reference. For example, the term "a vicinity of an end" refers to a range of regions in the vicinity of the end, and is a concept indicating that the end may or need not be included.

### Reference Signs List

1, 2, 3: Fuel filter
10: Filter case
11: First case
11a: Bottom surface
12: Opening end
13: Second case
13a: Thread portion
14: Plate-like portion
16: Drain plug
20: Head
21, 22: Tubular portion
22a: Thread portion
30: Housing
40, 40A, 40B, 40C: Filter element
41: First filter
41a: First filtration section
41b: Inner tube
41c: Outer tube
42, 42A: Second filter
42a: Second filtration section
42b: Frame
42c 42g: Tubular portion
42d, 42h: Plate
42e: Gripping portion
42f, 42i: Through-hole
43, 43A, 43B: Plate
43a, 43b, 43e, 43i: Tubular portion
43c, 43d, 43g, 43h: Hollow portion
43f: Plate-like portion
43j: Outer peripheral surface
44: Plate
45, 45A, 45B: Baffle plate
45a: Upper end
45b: Lower end
45c: Side surface
45d: Rib
45e: Groove
51: Float
52, 53, 54: Elastic member

## Claims

1. A fuel filter, comprising:
a housing including a filter case having a substantially tubular shape in which one end has an opening and the other end is covered, and a head disposed on the filter case to cover the opening; and
a filter element disposed in an internal space of the housing, the filter element being detachable from the housing,
wherein the filter element includes a first filter including a first filtration section formed in a tubular shape comprising a sheet-like filtration member folded into pleats, a second filter disposed on an inner side of the first filtration section, and a first plate at which the first filter and the second filter are disposed,
the second filter includes a second filtration section formed in a tubular shape by connecting both ends of a mesh-patterned thin plate, a first end portion covering a first end of the second filtration section, and a second end portion covering a second end of the second filtration section, the second end being on a side opposite to the first end,
the first plate is disposed in the head and has a first through-hole formed at a center thereof,
the first end portion is disposed at the first plate and is provided with a second through-hole that allows a hollow portion of the second filtration section and the first through-hole to communicate, and
the first end portion is detachable from the first plate.

2. The fuel filter according to claim 1, wherein
the first through-hole includes a large-diameter portion into which the first end portion is inserted and a small-diameter portion having a diameter smaller than that of the large-diameter portion,
the small-diameter portion is interposed between the head and the large-diameter portion, and
the second end portion is provided with a gripping portion.

3. The fuel filter according to claim 1 or 2, comprises a baffle plate having a tubular shape and disposed between the first filter and the second filter,
wherein the baffle plate has one end disposed at the first plate.

4. A fuel filter, comprising:
a housing including a filter case having a substantially tubular shape in which one end has an opening and the other end is covered, and a head disposed on the filter case to cover the opening; and
a filter element disposed in an internal space of the housing and detachable from the housing,
wherein the filter element includes a first filter including a first filtration section formed in a tubular shape comprising a sheet-like filtration member folded into pleats, a baffle plate having a tubular shape and disposed on an inner side of the first filter, and a first plate at which the first filter and the baffle plate are disposed,
the first plate is disposed in the head and has a first through-hole formed at a center thereof, and
a hollow portion of the baffle plate and an outflow portion disposed in the head are configured to communicate with each other through the first through-hole.

5. The fuel filter according to claim 3 or 4, wherein the baffle plate has a taper having a diameter gradually decreasing with distance from the first plate.

6. The fuel filter according to any one of claims 3 to 5, wherein the baffle plate has a height equal to or greater than a height of the first filtration section.

7. The fuel filter according to any one of claims 3 to 6, wherein a spiral groove or rib is formed in an outer peripheral surface of the baffle plate.
